# EUROPÄISCHE PATENTSCHRIFT

(11) **EP 1 219 392 B1**
(45) Veröffentlichungstag und Bekanntmachung des Hinweises auf die Patenterteilung: **02.08.2006**
(21) Anmeldenummer: 01811108.8
(22) Anmeldetag: 19.11.2001
(51) Int. Cl.: B25D 16/00, B25F 5/00, F16D 27/112, F16D 67/06

(54) **Elektrohandwerkzeug mit Sicherheitskupplung**
Electrical hand tool with safety clutch
Outillage électrique avec embrayage de sécurité

(30) Priorität: 01.12.2000 DE 10059747
(43) Veröffentlichungstag der Anmeldung: 03.07.2002
(73) Patentinhaber: HILTI Aktiengesellschaft, 9494 Schaan (LI)
(72) Erfinder: Kristen, Ferdinand, 82205 Gilching (DE); Bongers-Ambrosius, Hans-Werner, 81477 München (DE); Hellmann, Peter, 86836 Obermeitingen (DE)
(74) Vertreter: Wildi, Roland

(56) Entgegenhaltungen:
- EP-A- 0 537 022
- EP-A- 0 893 616
- EP-A- 0 947 721
- DE-A- 2 110 609
- US-A- 4 029 159
- US-A- 5 358 062

## Beschreibung

Die Erfindung bezeichnet ein Elektrohandwerkzeug für rotierende Werkzeuge mit einer Sicherheitskupplung, welche bei kritischen Betriebszuständen den viel Rotationsenergie speichernden Elektromotor von der restlichen Kraftübertragungskette trennt, insbesondere bei einem Bohrhammer.

Elektrohandwerkzeuge wie Bohrhämmer werden üblicherweise von einem schnell rotierenden und dadurch vermittelt über ihr Massenträgheitsmoment viel Rotationsenergie speichernden Elektromotor angetrieben. Um den Anwender bei kritischen Betriebszuständen, insbesondere bei einer Verhakung des Werkzeuges, vor unzulässigen Auslenkungen des handgeführten Elektrohandwerkzeuges zu schützen, muss entweder die Antriebsenergie hinreichend schnell abklingen oder die Kraftübertragungskette zwischen dem Rotationsenergie speichernden Elektromotor und dem Werkzeug hinreichend schnell getrennt werden. Bei einem Elektrohandwerkzeug grösserer Leistung klingt ohne zusätzliche Massnahmen die Antriebsenergie nicht hinreichend schnell ab.

Zum Trennen der Kraftübertragungskette werden als Sicherheitskupplungen ausgebildete Kupplungen zwischengeschaltet, welche nach der EP666148 als elektrisch gesteuerte elektromagnetische Kupplungen ausgebildet sind, die im Störfall die Kraftübertragungskette sehr schnell auftrennen und im Normalbetrieb durch die elektrisch gesteuerte Anpresskraft vermittelt über die Haftreibung einen Kraftschluss bewirken.

Nach der DE2110609 ist eine elektrisch steuerbare Magnetkupplungs-Brems-Kombination mit einem abtriebseitigen Rotor und mit einer antriebseitigen, axial federnd vorgespannten, Ankerscheibe ausgebildet, welche über den rotationssymmetrischen Magnetfluss einer stationär drehfest zugeordneten koaxialen Elektromagnetspule an einem radial beabstandeten axial orientierte Magnetpol angezogen eine reibschlüssige Übertragung eines Drehmoments ermöglicht. Nach der EP893616 ist eine als Bremse wirkende Reibscheibe einer Magnetkupplungs-Brems-Kombination im Antriebsstrang angeordnet. Des weiteren sind elektromagnetisch betätigte Kupplungs-Brems-Kombinationen aus der EP0537022 vorbekannt. Zudem offenbart die EP0947721 bezüglich der Oberfläche einer Kupplung deren Härtung durch Nitrierung und die US 4 029 159 eine Kupplungs-Brems-Kombination mit radial von aussen wirksamen Bremsschuhen.

Nach der DE2110609 weist eine elektromagnetische Schaltkupplung eine dem Rotor zugeordnete stationäre und drehfeste Elektromagnetspule sowie eine zum Rotor über einem Luftspalt axial federnd vorgespannte Ankerscheibe auf, welche über den rotationssymmetrischen Magnetfluss bei aktivierter Elektromagnetspule an den Magnetpolen angezogen eine reibschlüssige Übertragung eines Drehmoments vom Rotor zur Ankerscheibe ermöglicht. Im entkoppelten Zustand liegt die axial federnd vorgespannte Ankerscheibe im Flächenkontakt an einer stationären Bremsscheibe an.

Die Aufgabe der Erfindung besteht in der Realisierung einer raumsparend ein hohes Drehmoment übertragenden elektromagnetischen Sicherheitskupplung.

Die Aufgabe wird durch die Merkmale des unabhängigen Anspruchs 1 gelöst. Vorteilhafte Weiterbildungen ergeben sich aus den abhängigen Ansprüchen 2-8.

Im wesentlichen besteht eine, als Sicherheitskupplung für ein Elektrohandwerkzeuggerät ausgebildete, Kupplungs-Brems-Kombination mit einem Rotor und einer, zu diesem über einen Luftspalt axial federnd vorgespannten, Ankerscheibe, welche über den rotationssymmetrischen Magnetfluss einer rotorseitig stationär drehfest koaxial zugeordneten Elektromagnetspule an Magnetpolen angezogen eine reibschlüssige Übertragung eines Drehmoments ermöglicht, wobei der im Magnetfluss wirksame Luftspalt durch einen, stationär angeordneten, axialen Anschlag begrenzt wird, an welchem die Ankerscheibe im entkoppelten Zustand unter einer axialen Restvorspannung anliegt.

Durch den, die axiale Restvorspannung der Ankerscheibe im entkoppelten Zustand bewirkenden, Anschlag ist in einem zum Einkuppeln tolerierbaren Spaltbereich stets eine, für die Sicherheitskupplung notwendige, hinreichend schnelle Rückfederung der Ankerscheibe zum schnellen Entkuppeln gegeben.

Der ringförmige Anschlag besteht aus einem gleitfähigen Material wie Rotguss und bildet mit der entkuppelten Ankerscheibe nur einen linienförmigen Kontakt aus.

Vorteilhaft ist die axiale Restvorspannung der die Ankerscheibe axial vorspannenden Feder, welche weiter vorteilhaft als axiale Blattfeder innerhalb einer radial geteilten Ankerscheibe ausgeführt ist, im Bereich von 1...5 N dimensioniert, wodurch die Ankerscheibe mit einer Masse im Bereich von 45 g innerhalb von 5 ms zurückfedert und somit bezüglich des Reibschlusses entkuppelt wird.

Vorteilhaft erstreckt sich der tolerierbare Spaltbereich von 0,3 bis 0,5 mm, in welchem sowohl ein Freilauf eines nicht exakt axial rotierenden Rotors und/oder der Ankerscheibe als auch die zur Überwindung der axialen Restvorspannung notwendige Magnetkraft durch eine dazu ausreichende Magnetflussdichte gegeben ist.

Vorteilhaft sind die Ankerscheibe und der Rotor derart einander rotationssymmetrisch ausgeformt und koaxial zugeordnet, dass sich zwei radial beabstandete, axial orientierte Polschuhe ausbilden, wodurch bei Annäherung an den eingekuppelten Zustand die Magnetflussdichte stärker als mit nur einem axialen Polschuhe ansteigt und somit das durch die Reibnormalkraft bestimmte übertragbare Drehmoment grösser ist.

Vorteilhaft ist der Rotor antriebseitig und die Ankerscheibe abtriebseitig angeordnet, wodurch beim Entkoppeln bedingt durch die geringere Masse der Ankerscheibe eine geringere Restrotationsenergie übernommen wird.

Der Rotor ist topfförmig, die Elektromagnetspule dreiseitig eng umgebend, ausgebildet, wodurch eine hohe Magnetflussdichte erzielt wird.

Vorteilhaft weist der Rotor eine zumindest teilweise radiale, weiter vorteilhaft zylindermantelförmige, Aussenfläche auf, welche, durch die senkrecht zur Drehachse orientierte Flächennormale, im Falle einer Druckbeanspruchung keine axialen Gegenkräfte bewirkt.

Vorteilhaft ist der teilweise radialen Aussenfläche des Rotors ein steuerbares, radial bewegliches, weiter vorteilhaft mit einer radial inneren Reibfläche ausgestattetes, Bremselement zugeordnet, welches eine steuerbare aktive Abbremsung des Rotors bewirkt.

Vorteilhaft ist die reibschlüssig wirksame radiale Aussenfläche des, aus magnetisch weichem Material wie 9SMN28 mit einer bestimmten Härte bestehenden, Rotors über Gasnitrieren gehärtet, wobei die Dicke der Nitrierschicht weiter vorteilhaft im Bereich von 0,003 bis 0,01 mm liegt. Somit sind über 10000 Bremsungen ohne Verschleiss des magnetisch weichen Materials durchführbar. Vorteilhaft erfolgt durch das geringe Dickenwachstum der Nitrierschicht von 0,008 bis 0,020 mm keine relevante Durchmesservergrösserung des Rotors, wodurch eine hohe Bauteilgenauigkeit ermöglicht wird.

Vorteilhaft ist das Bremselement als ein baulich kleiner, elektromagnetisch steuerbarer Bremsschuh oder als elektromagnetisch steuerbares Bremsband ausgebildet, wodurch in einem Handwerkzeuggerät mit eng begrenztem Freiraum eine aktive Abbremsung des mit dem Rotor verbundenen, nach der Entkopplung nachlaufenden, Elektromotors erzielt werden kann.

Die Erfindung wird bezüglich eines vorteilhaften Ausführungsbeispiels näher erläutert mit:
Fig. 1 als ein Elektrohandwerkzeuggerät mit Sicherheitskupplung
Fig. 2 als eine, als Sicherheitskupplung für ein Elektrohandwerkzeuggerät ausgebildete, Kupplungs-Brems-Kombination

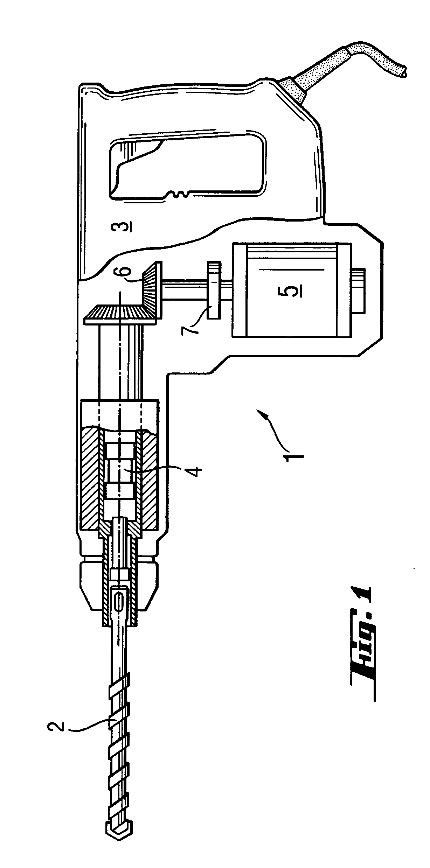

Nach Fig. 1 ist in einem Elektrohandwerkzeuggerät 1 mit einem, zumindest teilweise drehenden, Werkzeug 2, in einem Gehäuse 3 ein Schlagwerk 4 und innerhalb des Kraftflusses vom drehenden Elektromotor 5 auf ein Getriebe 6 eine Sicherheitskupplung 7 angeordnet.

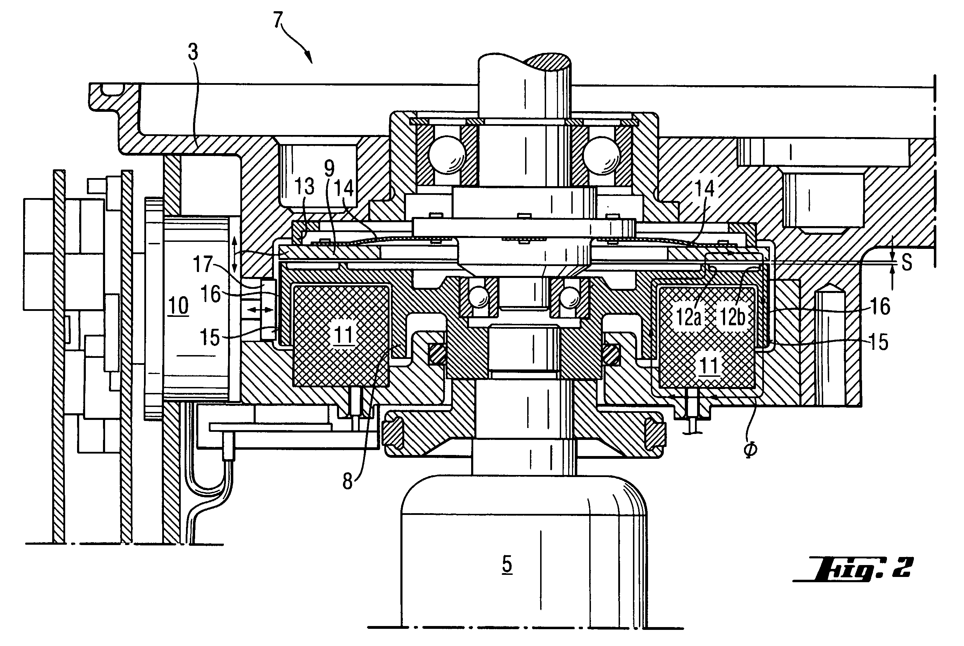

Nach Fig. 2 ist die Sicherheitskupplung 7 als Kupplungs-Brems-Kombination mit einem drehbaren Rotor 8 und einer zugeordneten drehbaren und axial begrenzt beweglichen Ankerscheibe 9 und einem stationär am Gehäuse 3 angeordneten Bremselement 10 ausgebildet. Die Ankerscheibe 9, welche über den rotationssymmetrischen Magnetfluss φ einer rotorseitig dem Rotor 8 koaxial zugeordneten, stationär am Gehäuse 3 angeordneten, ringförmigen Elektromagnetspule 11 an zwei axialen Magnetpolen 12a, 12b angezogen, eine reibschlüssige Übertragung eines Drehmoments ermöglicht, bildet im dargestellten entkoppelten Zustand zwischen der Ankerscheibe 9 und dem Rotor 8 einen schmalen Luftspalt S von 0,4 mm im Magnetfluss φ aus, welcher durch einen, stationär am Gehäuse 3 angeordneten, ringförmigen axialen Anschlag 13 begrenzt wird, an welcher die Ankerscheibe 9 im dargestellten entkoppelten Zustand unter einer axialen Restvorspannung anliegt und mit der entkuppelten Ankerscheibe 9 nur einen linienförmigen Kontakt ausbildet. Die scheibenförmig ausgebildete Ankerscheibe 9, welche radial durch eine axial vorgespannte, als Blattfeder ausgeführte, Feder 14 unterteilt ist, ist abtriebseitig dem nicht dargestellten Getriebe und der topfförmig ausgebildete, die Elektromagnetspule 11 dreiseitig eng umgebende, Rotor 8 ist antriebseitig dem Elektromotor 5 zugeordnet. Der Rotor 8 weist eine radiale, zylindermantelförmige Aussenfläche 15 mit einer Nitrierschicht 16 von 0,007 mm auf, welcher das mit einer radial inneren Reibfläche 17 ausgestattete, als Bremsschuh ausgebildete, Bremselement 10 elektromagnetisch steuerbar, radial beweglich, reibschlüssig zugeordnet ist.

## Patentansprüche

1. Sicherheitskupplung für ein Elektrohandwerkzeuggerät mit einem Rotor (8), einer dem Rotor koaxial zugeordneten stationären und drehfesten Elektromagnetspule (11) und einer zum Rotor über einen Luftspalt (S) axial federnd vorgespannten Ankerscheibe (9), welche über den rotationssymmetrischen Magnetfluss (φ) bei aktivierter Elektromagnetspule (11) an mindestens einem Magnetpol (12a, 12b) des Rotors angezogen eine reibschlüssige Übertragung eines Drehmoments vom Rotor (8) zur Ankerscheibe (9) ermöglicht, wobei der im Magnetfluss (φ) wirksame Luftspalt (S) durch einen, stationär angeordneten, axialen Anschlag (13) begrenzt ist, an welchem die Ankerscheibe (9) im entkoppelten Zustand unter einer axialen Restvorspannung anliegt, **dadurch gekennzeichnet, dass**
der axiale Anschlag (13) aus gleitfähigem nicht magnetischem Material besteht und ringförmig, die entkuppelte Ankerscheibe (9) nur als Linien Kontakt kontaktierend, ausgebildet ist,
die Ankerscheibe (9) und der Rotor (8) zwei radial beabstandete, axial orientierte Polschuhe (12a, 12b) ausbilden, und der Rotor (8) topfförmig, die Elektromagnetspule (11) dreiseitig eng umgebend, ausgebildet ist.

2. Sicherheitskupplung nach Anspruch 1, **dadurch gekennzeichnet, dass** die axiale Restvorspannung der die Ankerscheibe axial vorspannenden Feder im Bereich von 1...5 N dimensioniert ist.

3. Sicherheitskupplung nach einem der vorherigen Ansprüche, **dadurch gekennzeichnet, dass** sich der Luftspalt (S) im Bereich von 0,3 bis 0,5 mm erstreckt.

4. Sicherheitskupplung nach einem der vorherigen Ansprüche, **dadurch gekennzeichnet, dass** der Rotor (8) antriebseitig und die Ankerscheibe (9) abtriebseitig angeordnet ist.

5. Sicherheitskupplung nach einem der vorherigen Ansprüche, **dadurch gekennzeichnet, dass** dem Rotor (8) ein steuerbares, radial bewegliches, optional mit einer Reibfläche (17) ausgestattetes, Bremselement (10) zugeordnet ist.

6. Sicherheitskupplung nach Anspruch 5, **dadurch gekennzeichnet, dass** das Bremselement (10) als ein baulich kleiner, elektromagnetisch steuerbarer Bremsschuh oder als elektromagnetisch steuerbares Bremsband ausgebildet ist.

7. Sicherheitskupplung nach Anspruch 5 oder Anspruch 6, **dadurch gekennzeichnet, dass** das Bremselement (10) einer zumindest teilweise radialen Aussenfläche (15) des Rotors (8) steuerbar reibschlüssig zuordenbar ist.

8. Sicherheitskupplung nach einem der Ansprüche 5 bis 7, **dadurch gekennzeichnet, dass** die radiale Aussenfläche (15) des Rotors (8) eine Nitrierschicht (17) aufweist.

## Claims

1. Safety clutch for an electrical hand tool with a rotor (8), a torque proof stationary electromagnetic coil (11) assigned coaxially to the rotor and an anchor plate (9) axially elastically prestressed in relation to the rotor through an air gap (S), which makes it possible to transfer a torque frictionally from the rotor (8) to the anchor plate (9) through the rotationally symmetric magnetic flow (Φ) when the electromagnetic coil (11) is activated, attracted to at least one magnetic pole (12a, 12b) of the rotor, in which the effective air gap (S) in the magnetic flow (Φ) is limited by a stationarily arranged axial stop (13), on which the anchor plate (9) sits in a decoupled state under an axial residual prestress, **characterised in that** the axial stop (13) is made of low-friction, non-magnetic material in the shape of a ring, contacting the decoupled anchor plate (9) as a line contact, the anchor plate (9) and the rotor (8) form two radially spaced axially orientated pole shoes (12a, 12b), and the rotor (8) is made in the shape of a cup, which surrounds the electromagnetic coil (11) closely on three sides.

2. Safety clutch according to claim 1, **characterised in that** the axial residual prestress of the spring axially prestressing the anchor plate is dimensioned in the range of 1...5 N.

3. Safety clutch according to one of the previous claims, **characterised in that** the air gap (S) is in the range from 0.3 to 0.5 mm.

4. Safety clutch according to one of the previous claims, **characterised in that** the rotor (8) is arranged on the drive side and the anchor plate (9) on the output side.

5. Safety clutch according to one of the previous claims, **characterised in that** a controllable, radially mobile brake element (10) optionally fitted with a friction area (17) is assigned to the rotor (8).

6. Safety clutch according to claim 5, **characterised in that** the brake element (10) is made as a structurally small, electromagnetically controllable brake shoe or as an electromagnetically controllable brake band.

7. Safety clutch according to claim 5 or claim 6, **characterised in that** the brake element (10) can be assigned frictionally to an outside face (15) of the rotor (8), which is at least partly radial.

8. Safety clutch according to one of claims 5 to 7, **characterised in that** the radial outside face (14) of the rotor (8) has a nitride layer (17).

## Revendications

1. Accouplement de sécurité pour un outil électrique à main, comprenant un rotor (8), une bobine. électromagnétique fixe et solidaire en rotation (11) associée coaxialement au rotor, et une plaque d'induit (9) qui est soumise à une précontrainte élastique axiale vers le rotor à travers un entrefer (S) et qui, lorsque la bobine électromagnétique (11) est activée, permet par l'intermédiaire du- flux magnétique à symétrie de révolution (Φ) une transmission par friction d'un couple du rotor (8)-à la plaque d'induit (9) en étant excitée au niveau d'au moins un pôle magnétique (12a, 12b) du rotor, l'entrefer (S) actif dans le flux magnétique (Φ) étant limité par une butée axiale fixe (13) contre laquelle la plaque d'induit (9) est appliquée avec une précontrainte résiduelle axiale à l'état découplé, **caractérisé en ce que** la butée axiale (13) est constituée de matériau non magnétique apte au glissement et présente la forme d'un anneau qui ne crée qu'un contact linéaire avec la plaque d'induit découplée (9), **en ce que** la plaque d'induit (9) et le rotor (8) forment deux épanouissements polaires orientés axialement, distants radialement (12a, 12b), et **en ce que** le rotor (8) est conformé en pot entourant étroitement la bobine électromagnétique (11) sur trois côtés.

2. Accouplement de sécurité selon la revendication 1, **caractérisé en ce que** la précontrainte résiduelle axiale du ressort soumettant la plaque d'induit à une précontrainte axiale est de l'ordre de 1...5 N.

3. Accouplement de sécurité selon une des revendications précédentes, **caractérisé en ce que** l'entrefer (S) s'étend dans une plage de 0,3 à 0,5 mm.

4. Accouplement de sécurité selon une des revendications précédentes, **caractérisé en ce que** le rotor (8) est disposé côté menant et la plaque d'induit (9) côté mené.

5. Accouplement de sécurité selon une des revendications précédentes, **caractérisé en ce qu'**au rotor (8) est associé un élément de freinage commandé, mobile radialement (10), optionnellement pourvu d'une surface de friction (17).

6. Accouplement de sécurité selon la revendication 5, **caractérisé en ce que** l'élément de freinage (10) est conformé en sabot de frein de petites dimensions à commande électromagnétique ou en bande de frein à commande électromagnétique.

7. Accouplement de sécurité selon la revendication 5 ou la revendication 6, **caractérisé en ce que** l'élément de freinage (10) peut être associé par friction de manière commandée à une surface extérieure au moins partiellement radiale (15) du rotor (8).

8. Accouplement de sécurité selon une des revendications 5 à 7, **caractérisé en ce que** la surface radiale (15) du rotor (8) comporte une couche nitrurée (17).
